# EUROPÄISCHE PATENTANMELDUNG

(11) **EP 3 043 171 A1**
(43) Veröffentlichungstag der Anmeldung: **13.07.2016**
(21) Anmeldenummer: 16000002.2
(22) Anmeldetag: 07.01.2016
(51) Int. Cl.: G01N 21/952, G01B 5/00, G01B 11/24

(54) **ABROLLEINHEIT**

(30) Priorität: 09.01.2015 DE 202015000233 U
(71) Anmelder: GPP Chemnitz Gesellschaft für Prozeßrechnerprogrammierung mbH, 09111 Chemnitz (DE)
(72) Erfinder: Gube, Martin, 09116 Chemnitz (DE); Dietel, Dr.-Ing. Ulrich, 09114 Chemnitz (DE)
(74) Vertreter: Patentanwälte Findeisen & Neumann

(57) **Zusammenfassung**

Die Erfindung betrifft eine Abrolleinheit als technisches System zur Prüfung und Kontrolle von Oberflächenqualitäten, insbesondere rotationssymmetrischer Prüfteile. Aufgabe der Erfindung ist es, eine diesbezügliche Abrolleinheit zu schaffen, die zur Oberflächenkontrolle ein breites Prüfteilspektrum mit hoher Schärfentiefe aufweist, Schattenbilder vermeidet und schnelle Prüfprozesse in einer halb- oder vollautomatisierten Serienproduktion ermöglicht. Diese Aufgabe wird gelöst, indem ein Prüfteil (1) zwischen zwei Abrollwellen (2) eingespannt und mindestens ein verstellbarer bildhafter Oberflächenaufnahmesensor (3, 4) derart angeordnet ist, dass mit einem Spiegelsystem (5, 7, 8) einerseits und einer Beleuchtung (6) andererseits mindestens die zu diagnostizierende Mantelfläche eines Prüfteils (1) beleuchtet und zur Diagnose durch den Oberflächenaufnahmesensor aufgenommen wird.

## Beschreibung

Die Erfindung betrifft eine Abrolleinheit als technisches System zur Prüfung und Kontrolle von Oberflächenqualitäten, insbesondere rotationssymmetrischer Prüfteile.

Wenn die Oberfläche von Präzisionsteilen hochwertig sein soll bzw. oberflächenbehandelt (Finish-Prozess) bzw. beschichtet wurde, muss die Oberflächenqualität geprüft werden. Bei Oberflächenbehandlungen treten prozessspezifische und/oder teilespezifische Fehler auf. Diese Fehler können als Fehlerklassen definiert werden, nach denen die Prüfteile analysiert werden. Sofern die Prüfteile unterschiedliche körperliche Ausführungen aufweisen, gibt es bisher keine ausreichend effektive Lösung zur Präsentation dieser Prüfteile. Dies trifft insbesondere zu, wenn ein hohes Spektrum unterschiedlich geformter Präzisionsteile auf einem technischen System zur Prüfung und Kontrolle von Oberflächenqualitäten, das üblicherweise in Kurzbezeichnung als "Abrolleinheit" bezeichnet wird, geprüft werden soll.

Aus einem Firmenprospekt der HOMMEL-ETAMIC GmbH ist eine Abrolleinheit für eine Oberflächenkontrolle von Nockenwellen bekannt. Bei dieser technischen Lösung werden Kamerasysteme über dem zu prüfenden Bauteil angeordnet. Hier ergibt sich der Nachteil, dass nur ein begrenztes Prüfteilspektrum wegen der begrenzten Schärfentiefe einsetzbar ist. Diese Lösung weist weiterhin den Nachteil auf, dass ein exaktes Vorführen des meist toleranzbehafteten Prüfteils nicht möglich ist oder nur mit einem sehr hohen Aufwand realisierbar ist. Meist werden Schattenbilder erzeugt und verarbeitet. Diese sind jedoch ausschließlich für Vermessungsaufgaben und nicht für eine Oberflächenkontrolle geeignet. Darüber hinaus sind schnelle Prüfprozesse, wie in einer Serienproduktion notwendig, nicht möglich, weil eine meist komplizierte Prüfteilaufnahme dies nicht zulässt.

Aufgabe der Erfindung ist es, eine Abrolleinheit zu schaffen, die zur Oberflächenkontrolle ein breites Prüfteilspektrum mit hoher Schärfentiefe aufweist, Schattenbilder vermeidet und schnelle Prüfprozesse in einer halb- oder vollautomatisierten Serienproduktion ermöglicht.

Erfindungsgemäß wird die Aufgabe durch die im ersten Patentanspruch benannten technischen Merkmale gelöst. Vorteilhafte Ausgestaltungen sind Gegenstand von Unteransprüchen.

Der Vorteil der Erfindung besteht darin, dass die Abrolleinheit zur Oberflächenkontrolle bei unterschiedlicher Form der Prüflinge ein Prüfteilspektrum mit hoher Schärfentiefe zulässt wobei Schattenbilder vermieden werden und dass sie einen schnellen Prüfprozess in der Serienproduktion zulässt.

Nachfolgend werden zwei Ausführungsbeispiele der Erfindung anhand der Zeichnung näher erläutert. Es zeigen:
- Fig. 1: eine perspektivische Ansicht einer ersten Abrolleinheit,
- Fig. 2: eine andere perspektivische Ansicht dieser Abrolleinheit
- Fig. 3: die Draufsicht auf diese Abrolleinheit,
- Fig. 4: eine perspektivische Ansicht einer weiteren Abrolleinheit,
- Fig. 5: eine andere perspektivische Ansicht dieser weiteren Abrolleinheit und
- Fig. 6: die Draufsicht auf diese weitere Abrolleinheit.

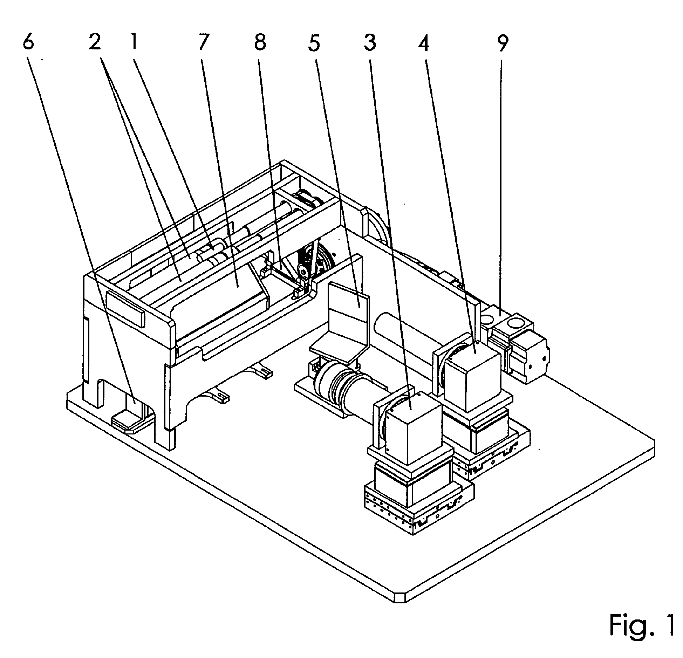

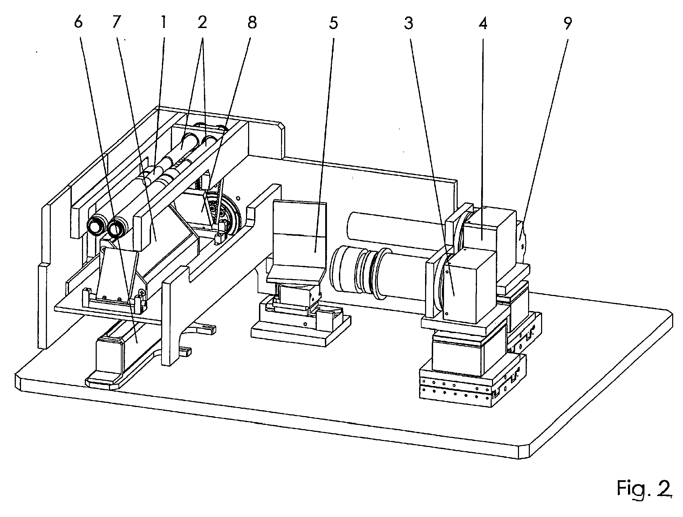

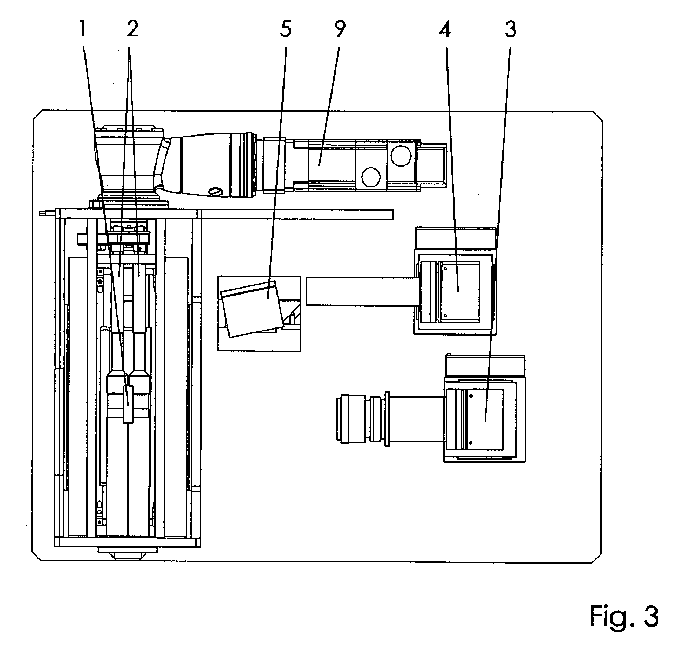

In **Fig. 1 bis Fig. 3** ist eine Abrolleinheit als technisches System zur Prüfung und Kontrolle von Oberflächenqualitäten, insbesondere Oberflächenqualitäten rotationssymmetrischer Prüfteile, dargestellt. Hierbei ist ein zu prüfendes Bauteil als Prüfteil 1 zwischen zwei Abrollwellen 2 angeordnet. Zur Oberflächenabtastung ist mindestens ein verstellbarer bildhafter Oberflächenaufnahmesensor angeordnet, wobei mit einem Spiegelsystem einerseits und einer Beleuchtung andererseits mindestens die zu diagnostizierende Mantelfläche des Prüfteils 1 beleuchtet und zur Diagnose durch den Oberflächenaufnahmesensor aufgenommen wird. Das Spiegelsystem besteht aus einem drehbaren Spiegelsystem 5, einer Spiegeleinheit 7 und einem einstellbaren Beleuchtungsspiegel 8. Die Spiegel des drehbaren Spiegelsystems 5 sind verstellbare halbdurchlässige Spiegel.

In einer ersten Ausführung sind zwei verstellbare bildhafte Oberflächenaufnahmesensoren (z.B. Zeilen- und/oder Flächenkameras, nämlich zwei Kamerasysteme) als ein erstes Kamerasystem 3 und ein zweites Kamerasystem 4 mit einem drehbaren Spiegelsystem 5 angeordnet. Zur Fokussierung sind das erste Kamerasystem 3 und/oder das zweite Kamerasystem 4 maschinell verstellbar. Jeder Oberflächenaufnahmesensor kann mit einer prüfteilspezifischen Autofokusfunktion axial und/oder vertikal und/oder auch horizontal verstellt werden. Da die Endflächen des Prüfteils 1 eine unterschiedliche Form aufweisen können, ist das drehbare Spiegelsystem 5 derart angeordnet, dass diese Flächen auf die bildhaften Aufnahmesensoren des ersten und zweiten Kamerasystems 3 und 4 projiziert werden, um Verjüngungen oder spitzenförmige Kegelflächen an den Prüfteilen 1 aufzunehmen. Somit kann die Oberflächenabbildung auch von Prüfteilspitzen unterschiedlicher Form erfolgen. Zur Beleuchtung des Prüfteils 1 ist unter ihm eine Beleuchtung 6 mit einer Spiegeleinheit 7 und einem einstellbaren Beleuchtungsspiegel 8 angeordnet. Zur Drehung der Abrollwellen 2 mit dem Prüfteil 1 ist eine Antriebseinheit 9 angeordnet.

Um die Oberflächenprüfaufgabe zu erfüllen wird ein Prüfteil 1 zwischen zwei Abrollwellen 2 manuell oder automatisiert abgelegt. Die paarweisen Abrollwellen 2 werden in Drehung versetzt, so dass das rotationssymmetrische Prüfteil 1 durch die Haftreibung die Rotation aufnimmt und sich somit auch dreht. Die beiden Abrollwellen 2 sind so angeordnet, dass ein geeigneter Abstand zwischen beiden besteht, um mit einem bildhaften Sensor, dem ersten Kamerasystem 3, die Oberfläche des Prüfteils 1 während der Drehung aufzunehmen. Das zweite Kamerasystem 4 kann eine andere Fläche des Prüfteils 1 aufnehmen.

Ist das Prüfteil 1 in Rotation versetzt worden, kann der Bildaufnahmevorgang beginnen. Die Abrollwellen 2 sind in Abhängigkeit der Form des Prüfteils 1 konturiert. Dadurch wird ein gleichmäßiges Abrollen des Prüfteils 1 erreicht und Greifer von automatischen Handlingssystemen (nicht dargestellt) können die Prüfteile 1 positionsgenau ablegen. Die Abrollwellen 2 sind darüber hinaus so ausgeführt, dass ein oder mehrere Ablagepositionen für unterschiedliche Typen des Prüfteils 1 festgelegt sind. Damit ist eine große Typenvielfalt der prüfbaren Prüfteile 1 möglich.

Eine Beleuchtung 6 des Prüfteils 1 erfolgt über einen Strahlenteiler, vorzugsweise einen halbdurchlässigen Spiegel. Damit wird eine optimale Ausleuchtung der Oberfläche während der Rotation des Prüfteils 1 und der Bildaufnahme der Oberfläche erreicht. Eine einzige Umdrehung des Prüfteils 1 ist für den Prüfprozess ausreichend, sofern nicht verschiedene Wellenlängen zur Auswertung erforderlich sind. Weist das rotationssymmetrische Prüfteil 1 unterschiedliche Durchmesser auf, so werden die Abrollwellen 2 mit einer entsprechenden Gegenkontur ausgeführt. Bei der Verwendung von Werkzeugen oder Hilfsmitteln zum Auflegen und Abnehmen des Prüfteils 1 werden geeignete Aussparungen in den Abrollwellen 2 eingebracht. Wenn die Prüfteilevielfalt sehr hoch ist, sind mehrere Ablagepositionen festgelegt. Dadurch wird teilespezifisch die Ablageposition geändert und es kann die Abrolleinheit insgesamt in Bezug auf die Aufnahmeposition des ersten und des zweiten Kamerasystems 3 und 4 verschoben werden.

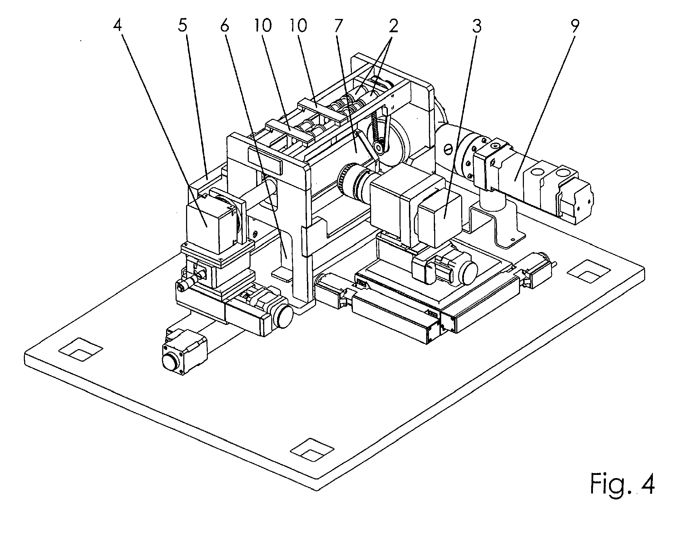

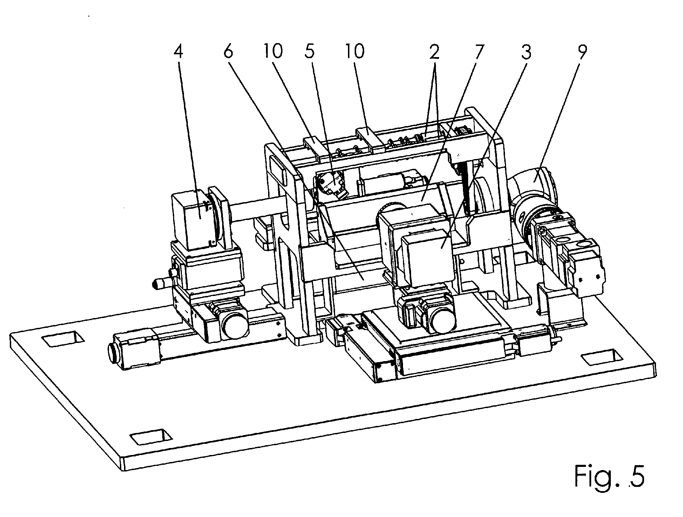

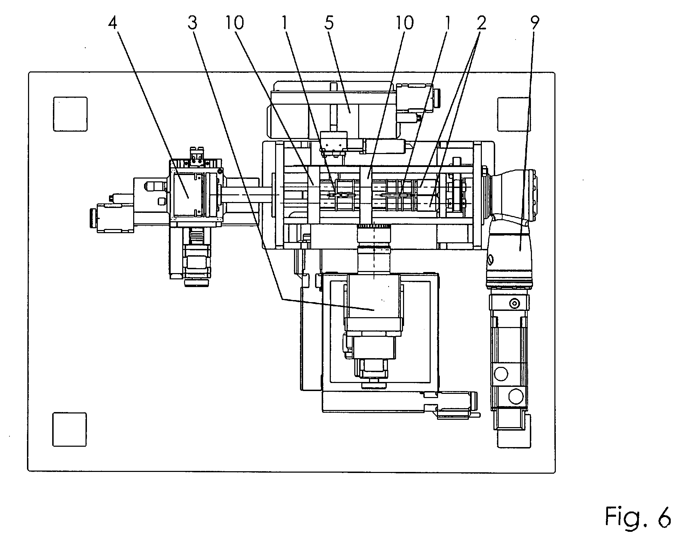

In **Fig. 4 bis Fig. 6** ist eine zweite Ausführung dargestellt. Auch bei dieser Variante wird ein Prüfteil 1 zwischen zwei Abrollwellen 2, die durch die Antriebseinheit 9 gedreht werden, gehalten. Allerdings wird hier nicht nur die Oberfläche des Prüfteils 1 geprüft, sondern auch seine Kopf- oder Spitzenfläche, weil eine der bildhaften Oberflächenaufnahmesensoren eine elektrisch verstellbare Spitzenkamera ist. In diesem Ausführungsbeispiel ist das Kamerasystem 4 als Spitzenkamera zur Aufnahme der Kopf- oder Spitzenfläche des Prüfteils 1 ausgeführt, wobei auch hier zur Beleuchtung ein drehbares Spiegelsystem 5 dient. Das Kamerasystem 4 ist ebenfalls verstellbar. Eine Spitzenbeleuchtung 10, die in der Position manuell oder automatisch versetzbar ist, beleuchtet die Aufnahmeflächen des Kamerasystems 4. Zur Beleuchtung der Mantelfläche des Prüfteils 1 ist unter ihm ebenfalls eine Beleuchtung 6 mit einer Spiegeleinheit 7 angeordnet. Mit dem Kamerasystem 3 wird wiederum die Manteloberfläche des Prüfteils 1 während der Drehbewegung aufgenommen.

Der Prüfvorgang wird über ein Prüfprogramm gesteuert und ausgeführt. Nach Auswahl oder Wechsel eines Typs des Prüfteils 1 erfolgt die automatisierte Einstellung der elektrisch verstellbaren Kamerasysteme 3 und 4, des drehbaren Spiegelsystems 5 und der Spiegeleinheit 7 zur jeweiligen Auflageposition des Prüfteils 1. Damit wird eine optimale Beleuchtung, eine korrekte Fokusebene und Schärfentiefe des Prüfteils 1 erreicht. Es ist auch eine manuelle Positionierung möglich, wie beispielsweise der Spitzenbeleuchtung 10. Die jeweiligen Positionen der Verstelleinheiten werden bei der Prüfprogrammerstellung definiert. Danach wird der Prüfvorgang gestartet und die Abrollwellen 2 werden mittels der aktivierten Antriebseinheit 9 in Rotation versetzt. Dadurch dreht sich das Prüfteil 1 und die Kamerasysteme 3 und/oder 4 werden als bildhafte Oberflächenaufnahmesensoren entsprechend des Prüfprogramms aktiviert und nehmen das jeweilige Oberflächenbild auf. Das digitalisierte Bild wird entsprechend dem Prüfprogramm ausgewertet.

### Bezugszeichenliste

- 1: Prüfteil
- 2: Abrollwellen
- 3: erstes Kamerasystem
- 4: zweites Kamerasystem
- 5: drehbares Spiegelsystem
- 6: Beleuchtung
- 7: Spiegeleinheit
- 8: einstellbarer Beleuchtungsspiegel
- 9: Antriebseinheit
- 10: Spitzenbeleuchtung

## Patentansprüche

1. Abrolleinheit enthaltend mindestens ein Kamerasystem, **dadurch gekennzeichnet, dass** ein Prüfteil (1) zwischen zwei Abrollwellen (2) eingespannt und mindestens ein verstellbarer bildhafter Oberflächenaufnahmesensor derart angeordnet ist, dass mit einem Spiegelsystem einerseits und einer Beleuchtung andererseits mindestens die zu diagnostizierende Mantelfläche eines Prüfteils (1) beleuchtet und zur Diagnose durch den Oberflächenaufnahmesensor aufgenommen wird.

2. Abrolleinheit nach Anspruch 1, **dadurch gekennzeichnet, dass** die Abrolleinheit als technisches System zwei verstellbare bildhafte Oberflächenaufnahmesensoren und zwei separate Kamerasysteme (3 und 4) aufweist.

3. Abrolleinheit nach Anspruch 1 oder 2, **dadurch gekennzeichnet, dass** mindestens ein bildhafter Oberflächenaufnahmesensor zur Fokussierung maschinell axial verstellbar ist.

4. Abrolleinheit nach Anspruch 1, 2 oder 3, **dadurch gekennzeichnet, dass** mindestens ein bildhafter Oberflächenaufnahmesensor zur Fokussierung maschinell vertikal verstellbar ist.

5. Abrolleinheit nach einem der Ansprüche 1 bis 4, **dadurch gekennzeichnet, dass** mindestens ein bildhafter Oberflächenaufnahmesensor zur Fokussierung maschinell horizontal verstellbar ist.

6. Abrolleinheit nach einem der Ansprüche 1 bis 5, **dadurch gekennzeichnet, dass** das Spiegelsystem aus einem drehbaren Spiegelsystem (5), einer Spiegeleinheit (7) und einem einstellbaren Beleuchtungsspiegel (8) besteht.

7. Abrolleinheit nach Anspruch 6, **dadurch gekennzeichnet, dass** die Spiegel des drehbaren Spiegelsystems (5) verstellbare halbdurchlässige Spiegel sind.

8. Abrolleinheit nach einem der Ansprüche 1 bis 7, **dadurch gekennzeichnet, dass** mindestens einer der bildhaften Oberflächenaufnahmesensoren eine elektrisch verstellbare Spitzenkamera ist.

9. Abrolleinheit nach Anspruch 8, **dadurch gekennzeichnet, dass** das Spiegelsystem aus einem drehbaren Spiegelsystem (5) und einer Spiegeleinheit (7) besteht.
